# EUROPÄISCHE PATENTSCHRIFT

(11) **EP 2 466 269 B1**
(45) Veröffentlichungstag und Bekanntmachung des Hinweises auf die Patenterteilung: **25.11.2015**
(21) Anmeldenummer: 11009937.1
(22) Anmeldetag: 17.12.2011
(51) Int. Cl.: G01D 5/245, G01D 5/14

(54) **Positionssensoreinrichtung und damit ausgestattete Linearantriebsvorrichtung**
Position sensor device and linear drive device fitted with same
Dispositif de capteur de position et dispositif d'entraînement linéaire en étant équipé

(30) Priorität: 18.12.2010 DE 102010055117
(43) Veröffentlichungstag der Anmeldung: 20.06.2012
(73) Patentinhaber: Festo AG & Co. KG, 73734 Esslingen (DE)
(72) Erfinder: Rieder, Wolfgang, 73732 Esslingen (DE)
(74) Vertreter: Patentanwälte Magenbauer & Kollegen Partnerschaft mbB

(56) Entgegenhaltungen:
- EP-B1- 0 775 835
- DE-A1-102004 046 107
- DE-B3-102004 024 910
- DE-U1- 20 116 564
- DE-U1- 20 205 132
- DE-U1-202007 001 420

## Beschreibung

Die Erfindung betrifft eine Positionssensoreinrichtung, mit mehreren Sensoreinheiten, die jeweils mindestens eine zum Detektieren einer sich in der Nähe befindlichen Bewegungskomponente geeignete Erfassungseinheit beinhalten, und mit einer Kommunikationsschnittstelle zur Ausgabe eines auf individuellen Messsignalen der mehreren Sensoreinheiten basierenden einheitlichen Positionssignals, wobei die Sensoreinheiten als mit elektrischen Schnittstellenmitteln ausgestattete individuelle Sensormodule ausgebildet sind, die unter gegenseitiger elektrischer Verkettung und Bildung eines Modulstranges in variabler Anzahl aneinanderreihbar sind. Ferner betrifft die Erfindung eine mit einer solchen Positionssensoreinrichtung ausgestattete Linearantriebsvorrichtung.

Positionssensoreinrichtungen, die auch als Positionstransmitter bezeichnet werden, ermöglichen die Bestimmung einer oder mehrerer Positionen einer sich bewegenden Komponente. Bei dieser Bewegungskomponente handelt es sich beispielsweise um die sich aus einem Kolben und einer Kolbenstange zusammensetzende Abtriebseinheit eines Linearantriebes, an dessen Gehäuse die Positionssensoreinrichtung fixierbar ist.

Die DE 10 2004 024 910 B3 offenbart eine Hallschalteranordnung mit einer Mehrzahl von in Serie geschalteten Hallschalterelementen, wobei ein erstes Hallschalterelement dazu ausgebildet ist, ein erstes Ausgangssignal bereitzustellen, das eine Information über einen Schaltzustand des ersten Hallschalterelements aufweist und wobei ein zweites Hallschalterelement dazu ausgebildet ist, das erste Ausgangssignal des ersten Hallschalterelements aufzunehmen und ein zweites Ausgangssignal bereitzustellen, das die Information über den Schaltzustand des ersten Hallschalterelements und eine weitere Information über einen Schaltzustand des zweiten Hallschalterelements umfasst.

Aus der DE 201 16 564 U1 ist eine Positionserfassungsvorrichtung zur Erfassung mehrerer Positionen eines entlang einer Führungsbahn bewegbaren Bauteils mittels einer an der Führungsbahn fixierbaren Sensoreinrichtung bekannt, wobei die Sensoreinrichtung wenigstens ein sich entlang eines Teilbereichs der Führungsbahn erstreckendes erstes Positionssensorelement zur kontinuierlichen Positionserfassung besitzt und wobei das erste Positionssensorelement über eine flexible Signalleiteranordnung mit wenigsten einem zweiten Positionssensorelement fest verbunden ist und wobei eines der Positionssensorelemente einen Sensorsignalanschluß für die Signale aller Positionssensorelemente umfasst.

Die DE 10 2004 046 107 A1 offenbart ein Sensorsystem mit wenigstens einem magnetischen oder induktiven Sensor zur Bestimmung von Kolbenpositionen, das zur Gewährleistung eines einfachen und damit kostengünstigen Aufbaus mehr als nur eine Kolbenposition erfassen kann, wobei Verstellmittel vorgesehen sind, mittels derer wenigstens zwei Schaltpunkte des Sensorsystems einstellbar sind.

Die DE 202 05 132 U1 beschreibt eine Antriebsvorrichtung für Linearbewegungen, mit einem Linearantrieb, der ein Antriebsgehäuse und ein in dem Antriebsgehäuse linear bewegbar angeordnetes Antriebsteil aufweist, wobei am Außenumfang des Antriebsgehäuses eine oder mehrere in Längsrichtung verlaufende und einen hinterschnittenen Querschnitt aufweisende Befestigungsnuten für zur Positionserfassung des Antriebsteils dienende Positionserfassungsmittel vorgesehen sind und wobei die Positionserfassungsmittel mindestens einen in eine Befestigungsnut eingesetzten Sensorstab umfassen, der mit mindestens zwei zur Erfassung unterschiedlicher Axialpositionen des Antriebsteils in einem vorgegebenen Schaltabstand axial beabstandet zueinander angeordneten Positionssensoren ausgestattet ist und der über einen den vorhandenen Positionssensoren gemeinsam zugeordneten Signalausgang verfügt.

Aus der EP 0 775 835 B1 ist eine Positionserfassungsvorrichtung zur Erfassung mehrerer Relativpositionen zwischen zwei relativ zueinander bewegbaren Bauteilen bekannt. Hierzu ist eine an dem einen der beiden Bauteile festgelegte Sensoreinrichtung vorgesehen, die eine Signalleiteranordnung mit mindestens einem mit einer Auswerteeinrichtung verbundenen Signalleiter aufweist, vorgesehen. Ferner sind wenigstens zwei in Arbeitsstellungen an unterschiedlichen Längspositionen der Signalleiteranordnung positionierbare und in den Arbeitsstellungen jeweils mit mindestens einem Signalleiter der Signalleiteranordnung kontaktierte, einen Sensor enthaltende Sensoreinheiten vorgesehen. Dabei sind mehrere Sensoreinheiten gleichzeitig wenigstens einem Signalleiter der Signalleiteranordnung derart gemeinsam zugeordnet, dass zur Übertragung der bei Betätigung eines Sensors dieser Sensoreinheiten entstehenden Sensorsignale zur Auswerteeinrichtung jeweils die gleichen Signalleiter genutzt werden, und dass jede dieser mehreren Sensoreinheiten mit einer Codiereinrichtung ausgestattet ist, die bei Betätigung des zugeordneten Sensors ein für diesen charakteristisches Codiersignal hervorruft, anhand dessen die Auswerteeinrichtung den betätigten Sensor erkennt.

Die DE 20 2007 001 420 U1 beschreibt einen fluidischen Zylinder mit Positionserfassungseinrichtung für die Kolbenposition, mit einem Zylindergehäuse, in dem ein mit einem Permanentmagneten versehener Kolben verschiebbar geführt ist, und mit einem Längskanal im Zylindergehäuse zur Aufnahme eines wenigstens zwei magnetfeldsensitive Sensoren aufweisenden langgestreckten Sensorträgers, wobei der Sensorträger an einem Gehäuseendbereich an einer Justierschraube zur Axialjustierung anliegt und sich am entgegengesetzten Gehäuseendbereich an einer Druckfeder abstützt.

Aus der WO 2008/008674 A2 ist eine Positionssensoreinrichtung der eingangs genannten Art bekannt, die die Position einer Bewegungskomponente über eine größere Wegstrecke hinweg erfassen kann. Hierzu setzt sich die bekannte Positionssensoreinrichtung aus mehreren Sensoreinheiten zusammen, von denen eine als Master und die übrigen als mit dem Master kommunizierende Slaves konfiguriert sind. Master und Slaves sind beispielsweise in einem vorbestimmten Raster in Ausnehmungen eines Gehäuses untergebracht und derart in einer Reihe angeordnet, dass sie gemeinsam eine Linearbewegungserfassungseinrichtung bilden, die neben der zu detektierenden Bewegungskomponente angeordnet werden kann.

Obgleich mit der aus der WO 2008/008674 A2 bekannten Positionssensoreinrichtung relativ einfach größere Wegstrecken einer Bewegungskomponente überwacht werden können, ist man bei der Anwendung mit der Problematik konfrontiert, dass zur Überwachung unterschiedlich langer Wegstrecken auch unterschiedlich lang ausgebildete individuelle Positionssensoreinrichtungen zur Auswahl zur Verfügung gestellt werden müssen. Damit verbunden ist ein relativ großer Aufwand für Herstellung und Lagerhaltung der unterschiedlichen Systeme.

Zwar wäre es denkbar, zur Erweiterung des Messbereiches mehrere gleich aufgebaute Positionssensoreinrichtungen unter Bildung einer Reihe von Positionssensoreinrichtungen hintereinander neben dem Verfahrweg der zu detektierenden Bewegungskomponente anzuordnen. Damit wäre jedoch der Nachteil verbunden, dass zur Überwachung ein und derselben Bewegungskomponente mehrere Positionssignale von der übergeordneten elektronischen Steuereinrichtung verarbeitet werden müssten. Es müsste insbesondere auch die Überlappung der Messbereiche der einzelnen Positionssensoreinrichtungen programmiert werden. Nicht zuletzt würde mit dieser Lösung eine größere Anzahl analoger Eingänge der elektronischen Steuereinrichtung belegt werden, so dass selbige zur Bewältigung der ihr übertragenen Aufgaben größer als eigentlich erforderlich dimensioniert werden müsste, mit entsprechender Kostenfolge.

Der Erfindung liegt die Aufgabe zugrunde, Maßnahmen zu treffen, die eine kostengünstige und dennoch präzise Überwachung unterschiedlich großer Wegstrecken von Bewegungskomponenten ermöglichen.

Zur Lösung dieser Aufgabe ist vorgesehen, dass die Sensormodule jeweils für die Ausgabe eines analogen Messsignals ausgebildet sind, das eine relative Lage der Bewegungskomponente gegenüber dem jeweiligen Sensormodul repräsentiert, so dass das einheitliche Positionssignal als Absolutpositionssignal für die Position der Bewegungskomponente längs des Modulstranges ermittelbar ist.

Eine besonders vorteilhafte Anwendung der Positionssensoreinrichtung liegt in der damit erfolgenden Ausstattung eines Linearantriebes, um die Position einer relativ zu einem Gehäuse des Linearantriebes bewegbaren Abtriebseinheit zu detektieren.

Anders als beispielsweise bei der Positionssensoreinrichtung der WO 2008/008674 A2 liegt nun keine starr und unflexibel ausgelegte Positionssensoreinrichtung mehr vor, sondern ein äußerst flexibles, modulares System, das es ermöglicht, auf der Grundlage mehrerer, insbesondere identisch ausgebildeter Sensormodule eine Positionssensoreinrichtung in individuell gewünschter Baulänge zusammenzustellen. Es lassen sich praktisch beliebig lange Wegstrecken der Bewegungskomponente abfragen, indem einfach eine entsprechende Anzahl der Sensormodule aneinandergereiht und elektrisch miteinander verkettet wird. Unabhängig von der Anzahl der aneinandergereihten und elektrisch miteinander verketteten Sensormodule des Modulstranges wird an der bevorzugt einzigen Kommunikationsschnittstelle der Positionssensoreinrichtung stets nur ein gemeinsames bzw. einheitliches Positionssignal ausgegeben, so dass an einer übergeordneten elektronischen Steuereinrichtung auch nur ein Eingang belegt wird, um das Positionssignal einspeisen und weiterverarbeiten zu können. Hierzu werden insbesondere die jeweils eine Position der Bewegungskomponente in Form eines, vorzugsweise analogen, Signalpegels repräsentierenden Ausgangssignale der einzelnen Sensormodule derart verarbeitet, dass eine einzige Positionsinformation in Form des einheitlichen Positionssignals ausgegeben wird.

Bei entsprechender Ausstattung der Positionssensoreinrichtung kann dem Anwender auch die Möglichkeit zur Verfügung gestellt werden, den für ihn interessanten Detektions- bzw. Erfassungsbereich der Positionssensoreinrichtung per Software zu Skalieren und/oder mehrere Schaltpunkte bzw. Erfassungspunkte über den kompletten Verfahrweg der Bewegungskomponente hinweg in der elektronischen Steuereinrichtung abzulegen.

Es besteht ferner die Möglichkeit, die Positionssensoreinrichtung bei der Ausstattung eines Linearantriebes durch Verwendung einer entsprechenden Anzahl von Sensormodulen entsprechend der Gehäuselänge des Linearantriebes zu konfektionieren und bei Bedarf fest an dem Linearantrieb zu verbauen. Der Anwender hat dadurch die Möglichkeit, die Bewegung der Abtriebseinheit des Linearantriebes über den gesamten Hub hinweg zu detektieren.

Vorteilhafte Weiterbildungen der Erfindung gehen aus den Unteransprüchen hervor.

Um die gewünschte elektrische Verkettung zwischen den Sensormodulen zu ermöglichen, sind selbige zweckmäßigerweise jeweils mit einander entgegengesetzt orientierten und insbesondere an einander entgegengesetzten Stirnseiten platzierten ersten und zweiten elektrischen Schnittstellenmitteln ausgestattet, die zueinander passen. Auf diese Weise können die Sensormodule jeweils paarweise zur Herstellung einer die elektrische Verkettung bewirkenden elektrischen Zwischenverbindung miteinander gekoppelt werden, wobei die ersten elektrischen Schnittstellenmittel des jeweils einen Sensormoduls mit den zweiten elektrischen Schnittstellenmitteln des jeweils benachbarten Sensormoduls koppelbar sind.

Eine mechanische gegenseitige Verkettung der aneinandergereihten Sensormodule ist nicht zwingend erforderlich, wenn andere Maßnahmen getroffen sind, die den Zusammenhalt des Modulstranges gewährleisten, beispielsweise ein Kanal in einem Gehäuse, in den die Sensormodule unter gleichzeitiger Querabstützung aufeinanderfolgend einsteckbar sind. Exemplarisch kann vorgesehen werden, dass nur das erste und das letzte Sensormodul eines Modulstranges in einem Kanal festgelegt werden, während die übrigen Sensormodule durch diese jeweils endseitig den Modulstrang begrenzenden Sensormodule arretiert werden.

Eine besonders sichere und dennoch einfache Handhabung der Positionssensoreinrichtung lässt sich allerdings dadurch gewährleisten, dass die Sensormodule jeweils mit mechanischen Befestigungseinrichtungen ausgestattet sind, die es ermöglichen, innerhalb des Modulstranges in Stranglängsrichtung jeweils benachbart zueinander angeordnete Sensormodule aneinander zu befestigen. Auf diese Weise sind die Sensormodule innerhalb des Modulstranges zu einer insbesondere selbsttragenden Modulbaugruppe zusammengefasst. Die mechanischen Befestigungseinrichtungen sind insbesondere vom lösbaren Typ, so dass einmal mechanisch gekoppelte Sensormodule jederzeit auch wieder voneinander getrennt werden können, weil sich beispielsweise der Erfassungsbereich der Bewegungskomponente verkürzt oder wenn aufgrund einer Funktionsstörung ein Austausch eines Sensormoduls angeraten erscheint.

Die Befestigungseinrichtungen sind vorzugsweise als Steckverbindungseinrichtungen ausgestaltet. Sie sind insbesondere so ausgebildet, dass die Sensormodule in der Längsrichtung des Modulstranges zusammensteckbar sind. Um ein versehentliches Lösen zu verhindern, können Sicherungsmittel vorhanden sein, beispielsweise Rastmittel.

Etwaige Steckverbindungsmittel können in klassischer Weise verwirklicht werden oder vorzugsweise auch in der Form von MID-Strukturen (MID = Moulded Interconnect Device), die direkt an einem Modulgehäuse der Sensormodule realisiert sein können.

Anstatt die elektrischen Schnittstellenmittel so auszubilden, dass sie ineinander eingreifen, können sie auch so konzipiert sein, dass sie lediglich kraftschlüssig in der Längsrichtung des Modulstranges aneinander anliegen und gegeneinander gedrückt werden. Man könnte hierbei auch auf federnd nachgiebige Kontaktmittel zurückgreifen.

Für die interne Signalübertragung in dem Modulstrang bieten sich verschiedene Möglichkeiten an. Möglich ist beispielsweise eine analoge Signalübertragung, wobei auf eine parallele Verdrahtung zurückgegriffen werden kann. Die elektrische Verkettung kann durch Steuerleitungen und eine gemeinsame Rückleitung realisiert werden. Die Signalübertragung ist auch derart realisierbar, dass ein jeweils zuerst aktives Sensor-modul sein Messsignal das jeweils nachfolgende Sensormodul weitergibt, das sein eigenes Messsignal dazuschaltet und wiederum weiterleitet. Bei den übertragenen Messsignalen handelt es sich vorzugsweise um Signale mit analogem Signalpegel, die in einem vorgebbaren Pegelintervall liegen. Derartige analogen Messsignale enthalten insbesondere eine zumindest im Wesentlichen dem Abstand zwischen der Bewegungskomponente und dem jeweiligen Sensormodul proportionale, im Signalpegel codierte Information.

Besonders komfortabel ist ein System, das über einen internen seriellen Bus des Modulstranges zur Signalübertragung verfügt. Hierdurch eröffnen sich vor allem zahlreiche Programmiermöglichkeiten, um die vorhandenen Sensormodule bzw. deren Erfassungseinheiten gezielt anzusprechen und/oder logisch zu verketten.

Die zur Ausgabe des gemeinsamen Positionssignals dienende Kommunikationsschnittstelle kann sich prinzipiell unmittelbar an einem der Sensormodule befinden. Es ist insbesondere möglich, ein kombiniertes Kommunikations- und Sensormodul vorzusehen, das sowohl über die Kommunikationsschnittstelle verfügt als auch mit mindestens einer Erfassungseinheit ausgestattet ist. Dieses Master-Sensormodul lässt sich dann mit einer beliebigen Anzahl weiterer Sensormodule, die keine externen Kommunikationsmöglichkeiten enthalten, zu dem Modulstrang verketten.

Eine flexiblere Lösung sieht vor, dass zusätzlich zu den Sensormodulen ein diesbezüglich gesondertes und mit der Kommunikationsschnittstelle ausgestattetes Kommunikationsmodul vorhanden ist, das nicht zugleich als Sensormodul fungiert und dementsprechend auch keine Erfassungseinheit beinhaltet. Dieses Kommunikationsmodul kann mit einer variablen Anzahl von Sensormodulen in einem Modulstrang zusammengefasst werden. Vorzugsweise ist es derart mit elektrischen Schnittstellenmitteln ausgestattet, dass es sich stirnseitig an eine Reihe von Sensormodulen ansetzen lässt. Es verfügt also über elektrische Schnittstellenmittel, die zu denjenigen der Sensormodule passen, so dass es mit praktisch jedem Sensormodul koppelbar ist, das am Anfang einer Modulreihe sitzt.

Insbesondere wenn die Steuermodule untereinander fixierbar ausgebildet sind, empfiehlt es sich, auch das Kommunikationsmodul mit einer mechanischen Befestigungseinrichtung auszustatten, mit deren Hilfe es in insbesondere lösbarer Weise am zugeordneten Steuermodul fixierbar ist.

Jedes Sensormodul kann im Übrigen mit entweder nur einer einzigen Erfassungseinheit oder mit mehreren Erfassungseinheiten ausgestattet sein. Sind mehrere Erfassungseinheiten pro Sensormodul vorhanden, kann ein größerer Erfassungsbereich abgedeckt werden. Die Erfassungseinheiten sind insbesondere als Magnetfeldsensoren konzipiert, so dass sie auf ein von einer sich in der Nähe befindenden Bewegungskomponente ausgegebenes Magnetfeld ansprechen. Andere Bauformen von Erfassungseinheiten sind jedoch ebenfalls möglich.

Vorzugsweise ist die Positionssensoreinrichtung mit einer elektronischen Auswerteeinrichtung ausgestattet, die zwischen der Kommunikationsschnittstelle und den Sensormodulen sitzt und die in der Lage ist, auf der Basis von Messsignalen, die ihr von den Sensormodulen bzw. von deren Erfassungseinheiten zugeleitet werden, das an der Kommunikationsschnittstelle auszugebende Positionssignal zu generieren. Sofern die Positionssensoreinrichtung über ein eigenständiges Kommunikationsmodul verfügt, befindet sich die Auswerteeinrichtung zweckmäßigerweise an Bord dieses Kommunikationsmoduls. Insbesondere wenn die Sensormodule nach dem Master-Slave-Konzept verwirklicht sind, kann sich die Auswerteeinrichtung auch an Bord eines insbesondere als Master fungierenden Sensormoduls befinden. Bei dem Positionssignal handelt es sich vorzugsweise um eine Ortsinformation über die Position der Bewegungskomponente längs des Modulstranges mit einer Ortsauflösung, deren Teilung kleiner als die geometrische Länge der jeweiligen Sensormodule längs einer Bewegungsachse für die Bewegungskomponente ist. Dies wird dadurch erreicht, dass die Sensormodule jeweils als Messsignalen einen analogen Signalpegel ausgeben, der in einem bekannten Zusammenhang, insbesondere in einer im Wesentlichen proportionalen Beziehung, zum Abstand zwischen dem jeweiligen Sensormodul und der Bewegungskomponente stehen. Somit ist die geometrische Länge der jeweiligen Sensormodule längs der Bewegungsachse der Bewegungskomponente nicht beschränkend für die Ortsauflösung der Ortsinformation. Beispielsweise kann bei einer Teilung der Sensormodule von 80mm eine Ortsauflösung im Bereich von Bruchteilen eines Millimeters liegen.

Die elektronische Ausstattung der Positionssensoreinrichtung kann so gewählt sein, dass die einzelnen Sensormodule im Wesentlichen nur eine Rohsensorik enthalten, beispielsweise einen Hall-Sensor mit digitalem Ausgang, so dass es sich bei den von den Sensormodulen ausgegebenen Messsignalen um unaufbereitete Rohmesswerte handelt. Deren Verarbeitung zu dem angestrebten Positionssignal erfolgt dann komplett in der Auswerteeinrichtung, die vor allem in diesem Zusammenhang nach dem IO-Link-Standard konzipiert ist.

Alternativ hierzu besteht auch die Möglichkeit, die Sensormodule mit jeweils einer eigenen elektronischen Auswerteeinheit auszustatten, so dass sie eine autarke Signalverarbeitung durchführen können und in der Lage sind, die von der zugeordneten mindestens einen Erfassungseinheit gelieferten Rohmesswerte derart zu Messsignalen aufzubereiten, dass in der übergeordneten elektronischen Auswerteeinrichtung nur noch die Verknüpfung und die Skalierung der einzelnen Sensorwerte zu einem das Positionssignal bildenden Gesamtsignal erfolgen muss.

Zwischen den beiden genannten Ausführungsarten sind mehrere Zwischen-Ausprägungen denkbar. So kann beispielsweise die Spannungsversorgung zentral in dem Kommunikationsmodul erfolgen oder auf den einzelnen Sensormodulen verteilt sein.

In vorteilhafter Ausgestaltung verfügt die Positionssensoreinrichtung über elektronische Identifiziermittel, die eine Identifizierung der von den einzelnen Sensormodulen innerhalb des Modulstranges jeweils eingenommenen Position ermöglichen. Jedes Sensormodul ist also dahingehend identifizierbar, ob es an erster, zweiter, dritter, etc. Stelle innerhalb des Modulstranges sitzt. Auf diese Weise ist eine elektronische Auswerteeinrichtung in der Lage, erhaltene Messsignale stets einem spezifischen Sensormodul zuzuordnen. Die Identifiziermittel sind insbesondere so ausgebildet, dass die Sensormodule die Position innerhalb der Modulkette selbst erkennen können. Insbesondere wenn ein digitaler, serieller interner Bus zur elektrischen Verkettung eingesetzt wird, kann jedes von einem Sensormodul ausgegebene Messsignal von einem Identifikationssignal begleitet sein.

Die Identifizermittel enthalten zweckmäßigerweise in den Sensormodulen befindliche, frei adressbare Adressspeicher, in denen die modulspezifische Position bzw. Adresse ablegbar ist, nachdem sie einmal ermittelt wurde. Zur Ermittlung der Position kann beispielsweise auf eine Referenzfahrt der zu detektierenden Bewegungskomponente zurückgegriffen werden. Eine andere Art der Positionsidentifikation ist jedoch ebenfalls möglich, beispielsweise durch elektronische Kommunikation der einzelnen Sensormodule untereinander und/oder mit einer elektronischen Steuereinrichtung.

In einer weiteren Ausführungsvariante verfügt die Positionssensoreinrichtung über Eingabemittel zur freien Programmierung der Sensormodule hinsichtlich ihrer individuellen Schaltpunkte. Die Schaltpunkte der Sensormodule sind also für jedes der Sensormodule über dessen gesamten Messbereich, der vorzugsweise zumindest der Erstreckung des jeweiligen Sensormoduls längs der Bewegungsachse für die Bewegungskomponente entspricht, variabel teachbar. Die entsprechenden Eingabemittel befinden sich insbesondere an derjenigen Komponente der Positionserfassungseinrichtung, die auch mit einer elektronischen Auswerteeinrichtung ausgestattet ist und insbesondere an dem gegebenenfalls vorhandenen Kommunikationsmodul. Die Eingabemittel können beispielsweise in Form von Tasten ausgebildet sein oder auch in Form einer elektromechanischen Schnittstelle, an die sich ein Eingabegerät anschließen lässt. Das Eingabegerät kann ein spezifisches Gerät sein oder unmittelbar von einer an den Modulstrang anschließbaren oder angeschlossenen externen elektronischen Steuereinrichtung gebildet sein.

Die Eingabemittel können auch ausgebildet sein, um festlegen zu können, welche der Erfassungseinheiten aktiv sein sollen und bei der Positionsbestimmung mitwirken sollen.

Die Positionssensoreinrichtung ist zweckmäßigerweise hinsichtlich ihrer Funktionalität parametrisierbar ausgebildet. Hierzu kann mindestens ein Modul des Modulstranges parametrisierbar sein. Die Parametrisierbarkeit bezieht sich insbesondere auf die Sensormodule und/oder auf das gegebenenfalls vorhandene Kommunikationsmodul. Jedes parametrisierbare Modul kann Speichermittel zum Abspeichern ihm spezifisch zugeordneter Parameter enthalten. Die Parameter sind zweckmäßigerweise über die Kommunikationsschnittstelle in den Modulstrang einspeisbar und werden insbesondere von einer an die Kommunikationsschnittstelle angeschlossenen externen elektronischen Steuereinrichtung geliefert.

Es ist insbesondere vorgesehen, dass innerhalb des Modulstranges die einzelnen Sensormodule ihre Parameter von demjenigen Modul - entweder ein Master-Sensormodul oder ein separates Kommunikationsmodul - erhalten, das mit der Kommunikationsschnittstelle ausgestattet ist. Die interne Datenübertragung erfolgt hierbei zweckmäßigerweise über die die elektrische Verkettung definierenden Mittel

Mögliche Parameter, die übermittelt werden, betreffen beispielsweise die Anpassung der Linearsierung der Messsignale und/oder des Positionssignals an einen mit der Modulanordnung ausgestatteten Linearantrieb und/oder die Auswahl zwischen Geschwindigkeit und Genauigkeit (Integrationstiefe) und/oder das Abschalten der Sensoren zum Stromsparen und/oder eine Temperaturkompensation durch einen zentralen Temperatursensor. Selbstverständlich sind auch noch weitere Parameter möglich.

Es ist von Vorteil, wenn die Positionssensoreinrichtung über Befestigungsmittel verfügt, mit deren Hilfe der Modulstrang insbesondere lösbar an einem Tragkörper in der Nähe der zu detektierenden Bewegungskomponente festlegbar ist. Die Befestigungsmittel dienen insbesondere zur Fixierung in einer Aufnahmenut des Tragkörpers. Sie sind zweckmäßigerweise an mindestens einer Komponente des Modulstranges angeordnet.

Zur Fixierung der Positionssensoreinrichtung können sämtliche Sensormodule und zweckmäßigerweise auch das gegebenenfalls vorhandene Kommunikationsmodul mit jeweils eigenen Befestigungsmitteln ausgestattet sein, so dass sie unabhängig von den jeweils anderen Modulen an einem Tragkörper fixierbar sind. Solche Befestigungsmittel bestehen beispielsweise aus einer Schraube, mit deren Hilfe sich das zugeordnete Modul in einer über einen hinterschnittenen Querschnitt verfügenden Aufnahmenut verspannen lässt.

Die Befestigungsmittel können sich auch beispielsweise auf die beiden den Modulstrang abschließenden Module beschränken, also beispielsweise auf einerseits ein Sensormodul und andererseits das Kommunikationsmodul. Somit lässt sich der Modulstrang im Bereich der beiden endseitigen Module an einem Trägkörper arretieren, während die dazwischen angeordneten Sensormodule nur untereinander fixiert sind und keine eigene Befestigung bezüglich des Tragkörpers erfahren.

Man kann auch zusätzlich zu den Sensormodulen und dem gegebenenfalls vorhandenen Kommunikationsmodul eigenständige Befestigungsmodule vorsehen, die insbesondere stirnseitig an dem Modulstrang ankoppelbar sind, um selbigen mit einem Tragkörper zu verbinden.

Als Erfassungseinheiten kommen außer den schon genannten Hall-Sensoren insbesondere auch magnetoresistrive Sensoren und/oder Planarspulensensoren und/oder Magnetoimpedanzsensoren zum Einsatz. Jedenfalls handelt es sich bei den Erfassungseinheiten vorzugsweise um Sensoren, die ein analoges Ausgangssignal ausgeben, um eine Ortsauflösung für die Position der Bewegungskomponente zu ermöglichen, die kleiner als die Erstreckung des jeweiligen Sensors längs der Bewegungsachse der Bewegungskomponente ist.

Zur Ankopplung der Positionssensoreinrichtung an eine übergeordnete externe elektronische Steuereinrichtung wird zweckmäßigerweise auf ein IO-Link-System zurückgegriffen.

Wenn durch die vorhandenen Erfassungseinheiten ineinander übergehende Messbereiche der Sensormodule zur Verfügung stehen, lässt sich die Positionssensoreinrichtung auch als kontinuierlich arbeitendes Wegmesssystem einsetzen.

Bei einer vorteilhaften Ausgestaltung der Erfindung ist vorgesehen, dass die Sensormodule jeweils für die Ausgabe des analogen Messsignals mit einer Ortsauflösung, die kleiner als eine geometrische Erstreckung des jeweiligen Sensormoduls längs einer Bewegungsachse der Bewegungskomponente ist, ausgebildet sind. Durch die Verarbeitung der analogen Messsignale der einzelnen Sensormodule eines Modulstrangs kann ein einziges, die Position der Bewegungskomponente längs des gesamten Modulstrangs kennzeichnendes Positionssignal in analoger oder digitaler Form bereitgestellt werden. Die Ortsauflösung dieses Positionssignals steht nicht in einem zwingenden Zusammenhang mit der geometrischen Ausdehnung der Sensormodule längs der Bewegungsachse der Bewegungskomponente vorzusehen, vielmehr ist es ausreichend, die analogen Messsignale der aneinander gereihten Sensormodule derart miteinander zu verknüpfen, dass daraus ein einziges Positionssignal errechnet und ausgegeben werden kann.

Die zu der Positionssensoreinrichtung gehörenden Sensormodule, deren Anzahl beliebig ist, verfügen untereinander zweckmäßigerweise über die gleiche Baulänge. Somit besteht die vorteilhafte Möglichkeit, die Sensormodule - abgesehen eventuell von einem eine abweichende Ausstattung aufweisenden Master-Sensor-Modul - in kostengünstiger Weise untereinander identisch zu gestalten. Die Herstellungskosten lassen sich mithin sehr gering halten. Es besteht gleichwohl die Möglichkeit, zur Verbesserung der Variabilität bei der Anpassung an unterschiedliche Messstrecken mehrere Typen von Sensormodulen bereitzustellen, die zwar in ihren elektromechanischen Schnittstellen übereinstimmen, so dass sie in beliebiger Reihenfolge aneinander anreihbar sind, die sich jedoch in ihrer Länge voneinander unterscheiden.

Nachfolgend wird die Erfindung anhand der beiliegenden Zeichnung näher erläutert. In dieser zeigen:
- Figur 1: eine mit einer bevorzugten Bauform der erfindungsgemäßen Positionssensoreinrichtung ausgestattete Linearantriebsvorrichtung,
- Figur 2: einen vergrößerten Ausschnitt der Linearantriebsvorrichtung aus Figur 1 im Bereich der Positionssensoreinrichtung, wobei separat auch noch zwei Sensormodule im Einzelzustand vor dem Zusammenfügen zu einem Modulstrang gezeigt sind,
- Figur 3: in einer mit Figur 2 vergleichbaren Darstellungsweise eine weitere Ausführungsform der Positions- sensoreinrichtung bzw. einer damit ausgestatteten Linearantriebsvorrichtung,
- Figur 4: ein Diagramm, das die von einzelnen Sensormodulen generierbaren wegabhängigen Messsignale verdeutlicht, und
- Figur 5: ein weiteres Diagramm, aus dem das als einheitliches Positionssignal verwendete Gesamtsignal der Sensormodulkette ersichtlich ist.

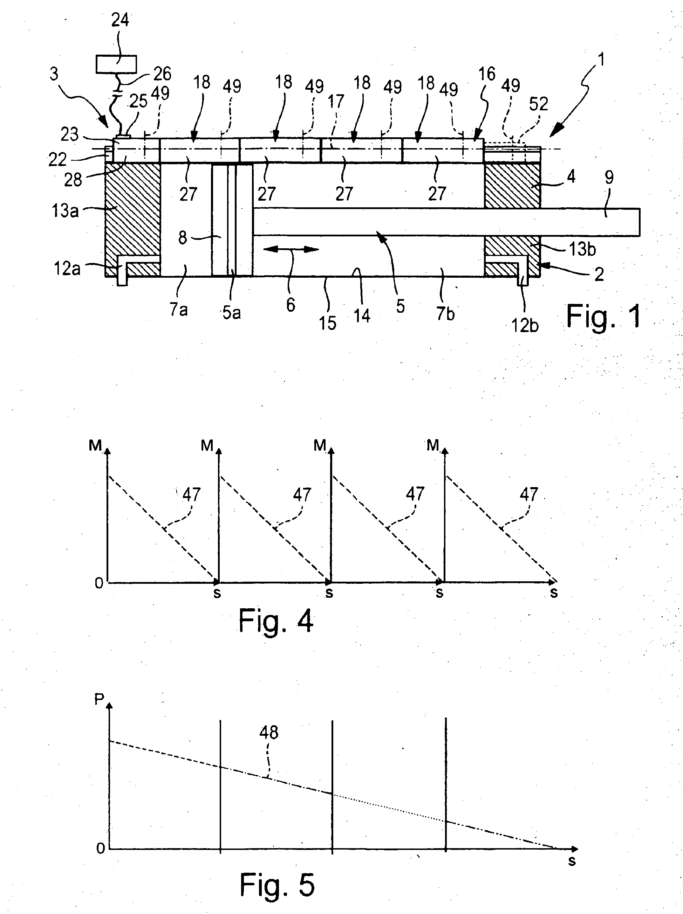

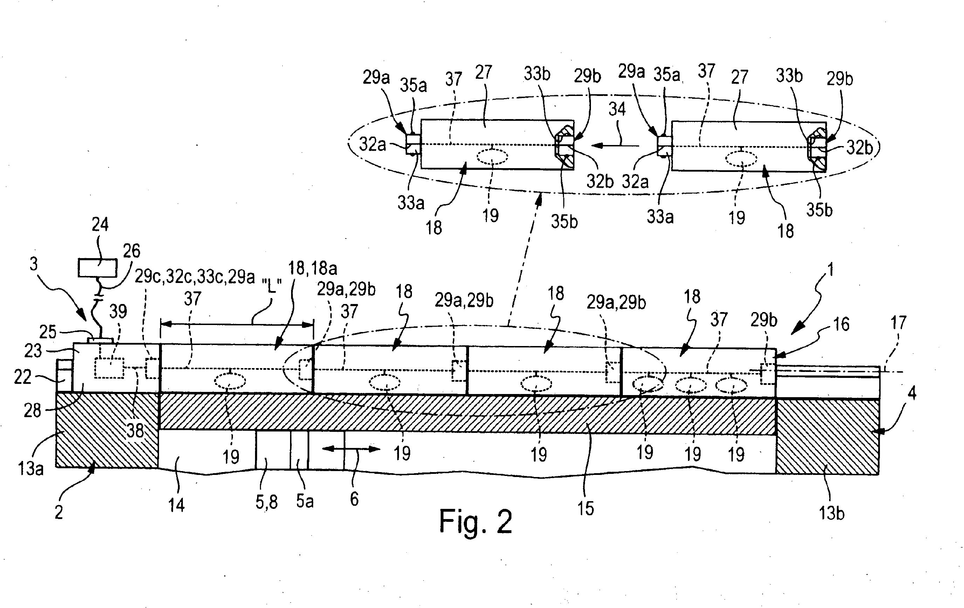

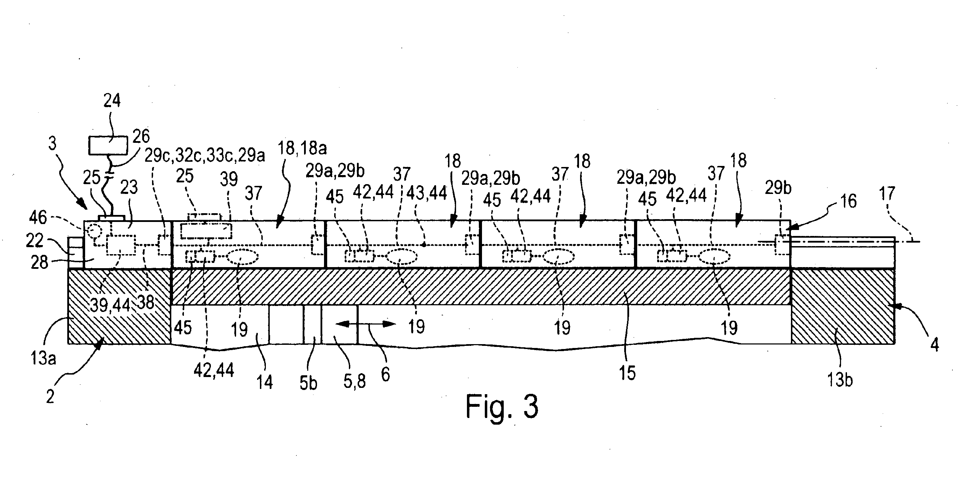

Die Figur 1 und, ausschnittsweise, die Figuren 2 und 3 zeigen jeweils eine Linearantriebsvorrichtung 1 im Längsschnitt, die einen Linearantrieb 2 und eine an dem Linearantrieb 2 montierte Positionssensoreinrichtung 3 enthält.

Der Linearantrieb 2 verfügt über ein Gehäuse 4, das einen Tragkörper bildet, an dem ein noch zu erläuternder, insbesondere als Modulbaugruppe realisierter Modulstrang 16 der Positionssensoreinrichtung 3 in bevorzugt lösbarer Weise befestigt ist.

Der Linearantrieb 2 weist außerdem eine Abtriebseinheit 5 auf, die unter Ausführung einer durch einen Doppelpfeil illustrierten Linearbewegung 6 relativ zu dem Gehäuse 4 bzw. Tragkörper verfahrbar ist.

Der Linearantrieb 2 des Ausführungsbeispiels ist von fluidbetätigter Bauart wobei die Linearbewegung 6 durch gesteuerte Fluidbeaufschlagung zweier Arbeitskammern 7a, 7b hervorgerufen wird, die von einem Kolben 8 der Abtriebseinheit 5 voneinander abgetrennt sind.

Die Abtriebseinheit 5 verfügt exemplarisch außer dem Kolben 8 auch noch über eine von dem Kolben 8 wegragende und aus dem Gehäuse 4 herausragende Kolbenstange 9, an der ein Bewegungsabgriff möglich ist.

Das Gehäuse 4 verfügt über zwei stirnseitige Abschlusswände 13a, 13b, die einen Innenraum 14 begrenzen, in dem der Kolben 8 unter gegenseitiger Abtrennung der beiden Arbeitskammern 7a, 7b aufgenommen ist. Jede Abschlusswand 13a, 13b ist von einem Fluidkanal 12a, 12b durchsetzt, durch den hindurch die gesteuerte Fluidbeaufschlagung möglich ist. Zwischen den beiden Abschlusswänden 13a, 13b erstreckt sich eine insbesondere rohrförmig strukturierte Umfangswand 15 des Gehäuses 4, die den Innenraum 14 peripher begrenzt.

Der Linearantrieb 2 könnte auch ein elektrischer oder ein kombiniert elektrisch und mit Fluidkraft betriebener Linearantrieb sein.

Die Positionssensoreinrichtung 3 weist eine über eine strangförmige Gestalt verfügende Modulbaugruppe 16 auf, die auch als Modulstrang bezeichnet werden kann und die über eine Längserstreckung mit Längsachse 17 verfügt. Sie ist an dem Gehäuse 4 ortsfest fixiert, und zwar in einem längsseits neben der Bewegungsbahn der Abtriebseinheit 5 liegenden Bereich. Die Ausrichtung ist derart getroffen, dass die Längsachse 17 mit der Bewegungsrichtung der Linearbewegung 6 zusammenfällt. Mithin bewegt sich die Abtriebseinheit 5 bei ihrer Linearbewegung 6 mit geringem Abstand zu der Modulbaugruppe 16 längsseits an dieser vorbei.

Die Positionssensoreinrichtung 3 ist in der Lage, mindestens eine bezüglich ihr und somit auch bezüglich dem Gehäuse 4 eingenommene Relativposition der Abtriebseinheit 5 zu erfassen. Genauer gesagt spricht die Positionssensoreinrichtung 3 auf eine Bewegungskomponente 5a an, die die Linearbewegung 6 mitmacht und die exemplarisch von einem Bestandteil der Abtriebseinheit 5 gebildet ist. Beim Ausführungsbeispiel ist die Bewegungskomponente 5a ein permanentmagnetischer Bestandteil der Abtriebs-einheit 5 und beispielsweise ein axial polarisierter Ringmagnet, der am Außenumfang des Kolbens 8 koaxial fixiert ist.

Die Bewegungskomponente 5a erzeugt ein Magnetfeld, das bei der Linearbewegung 6 mitwandert und sich dabei unter gleichzeitiger Durchdringung der Modulbaugruppe 16 in deren Längsrichtung bewegt.

Die Modulbaugruppe 16 verfügt über mehrere in Achsrichtung der Längsachse 17 aneinandergereihte und als individuelle Sensormodule 18 ausgebildete Sensoreinheiten. Jedes Sensormodul 18 ist mit mindestens einer Erfassungseinheit 19 ausgestattet, die auf das Magnetfeld der Bewegungskomponente 5a anspricht, wenn selbiges in ihre Nähe gelangt. Dementsprechend sind die Erfassungseinheiten 19 beim Ausführungsbeispiel von Magnetfeldsensoren gebildet, beispielsweise von Hall-Sensoren.

Jedes Sensormodul 18 ist beim Ausführungsbeispiel mit genau einer Erfassungseinheit 19 ausgestattet. In Figur 2 ist allerdings bei dem ganz rechts liegenden Sensormodul strichpunktiert angedeutet, dass jedes Sensormodul 18 alternativ auch mit mehreren Erfassungseinheiten 19 ausgestattet sein kann, die insbesondere in Achsrichtung der Längsachse 17 aufeinanderfolgend angeordnet sind.

Da jede Erfassungseinheit 19 einen in der Achsrichtung der Längsachse 17 beschränkten Messbereich hat, lässt sich der insgesamt realisierbare Erfassungsbereich der Positionssensoreinrichtung 3 durch Vergrößerung der Anzahl der Erfassungseinheiten 19 und dementsprechende Verringerung des zwischen den Erfassungseinheiten 19 vorhandenen Abstandes ebenfalls vergrößern. Die Erfassungseinheiten können auch so platziert und verteilt sein, dass ihre Erfassungs- bzw. Messbereiche unmittelbar aneinander anschließen und/oder sich überlappen.

Jedes Sensormodul 18 hat eine Modullänge "L". Exemplarisch sind die Erfassungseinheiten 19 in der Lage, einen axialen Messbereich zu erfassen, der mindestens dieser Modullänge "L" entspricht. Indem die Gesamtlänge des von den Sensormodulen 18 eingenommenen Modulstranges 16 mindestens der von der Bewegungskomponente 5a überstreichbaren Wegstrecke entspricht und der Modulstrang 16 so angeordnet ist, dass mit seinem Erfassungsbereich die gesamte mögliche Wegstrecke der Bewegungskomponente 5a abgedeckt wird, lässt sich mit der Positionssensoreinrichtung 3 jede der beiden Endlagen und außerdem jede dazwischenliegende Zwischenposition der Bewegungskomponente 5a und somit der Abtriebseinheit 5 erfassen.

Das Gehäuse 4 verfügt im Bereich seines Außenumfanges zweckmäßigerweise über mindestens eine sich in seiner Längsrichtung erstreckende Aufnahmenut 22, in der die Positionssensoreinrichtung 3 mit ihrem Modulstrang 16 aufgenommen und fixiert ist. Hiervon abweichend besteht beispielsweise auch die Möglichkeit, in dem Gehäuse 4 bzw. einem anderen Tragkörper eine insbesondere kanalförmige Ausnehmung vorzusehen, in die der Modulstrang 16 axial einsteckbar ist.

Außer den mit je mindestens einer Erfassungseinheit 19 ausgestatteten Sensormodulen 18 enthält die Modulbaugruppe bzw. der Modulstrang 16 vorzugsweise auch noch ein Kommunikationsmodul 23, über das der Modulstrang 16 mit einer vorzugsweise auch zu der Positionssensoreinrichtung 3 gehörenden externen elektronischen Steuereinrichtung 24 kommunizieren kann. Um diese Kommunikation zu ermöglichen, die zweckmäßigerweise auf elektrischer Basis stattfindet, ist das Kommunikationsmodul 23 mit einer geeigneten Kommunikationsschnittstelle 25 ausgestattet, an der sich ein zu der externen elektronischen Steuereinrichtung 24 führendes elektrisches Verbindungskabel 26 anschließen lässt. Die Kommunikationsschnittstelle 25 ist vorzugsweise für eine Steckverbindung ausgelegt.

Die Kommunikationsschnittstelle 25 kann auch zur drahtlosen Kommunikation mit einer externen elektronischen Steuereinrichtung 24 ausgebildet sein.

Die Sensormodule 18 haben zweckmäßigerweise eine längliche Gestalt und sind innerhalb des Modulstranges 16 so ausgerichtet, dass ihre individuellen Längsachsen mit der Längsachse 17 des Modulstranges 16 zusammenfallen. Jedes Sensormodul 18 verfügt zweckmäßigerweise über ein Modulgehäuse 27, in dem die mindestens eine Erfassungseinheit 19 geschützt untergebracht ist.

Vor der Bildung des Modulstranges 16 liegen die Sensormodule 18 als Einzelkomponenten vor, wie dies in Figur 2 in dem separat abgebildeten, umrahmten Bildausschnitt illustriert ist. Die Positionssensoreinrichtung 3 enthält eine Vielzahl solcher individueller Sensormodule 18, die in einer dem jeweiligen Anwendungsfall Rechnung tragenden Anzahl unter Bildung des Modulstranges 16 zumindest elektrisch und vorzugsweise auch mechanisch koppelbar sind. Dieses Koppeln geschieht durch axiales Aneinanderreihen der Sensormodule 18, wobei zur Vervollständigung des Modulstranges 16 auch noch das vorzugsweise vorhandene Kommunikationsmodul 23 in die Modulreihe integriert wird, insbesondere indem es an ein die Sensormodulreihe abschließendes Sensormodul 18, das zur besseren Erkennung zusätzlich mit Bezugsziffer 18a versehen ist, angekoppelt wird. Das Kommunikationsmodul 23 verfügt zweckmäßigerweise über ein Modulgehäuse 28, in dem seine elektronischen Komponenten geschützt untergebracht sind.

Jedes Sensormodul 18 verfügt an einer seiner beiden Stirnseiten über eine erste elektromechanische Verbindungseinrichtung 29a, in der erste elektrische Schnittstellenmittel 32a und eine erste mechanische Befestigungseinrichtung 33a zusammengefasst sind. An der entgegengesetzten Stirnseite verfügt jedes Sensormodul 18 über eine zweite elektromechanische Verbindungseinrichtung 29b, in der zweite elektrische Schnittstellenmittel 32b und eine zweite mechanische Befestigungseinrichtung 33b zusammengefasst sind. Die beiden elektromechanischen Verbindungseinrichtungen 29a, 29b sind in axialer Richtung einander entgegengesetzt orientiert und derart aufeinander abgestimmt, dass sie prinzipiell zusammenpassen, wobei sie insbesondere komplementär zueinander gestaltet sind.

Die elektromechanischen Verbindungseinrichtungen 29a, 29b können in vorteilhafter Weise als MID-Strukturen (MID = Moulded Interconnect Device) direkt am Modulgehäuse 27 implementiert sein. Alternativ ist auch eine klassische Gestaltung in Form beispielsweise zueinander passender Stifte und Buchsen denkbar.

Die elektromechanischen Verbindungseinrichtungen 29a, 29b sind jedenfalls so ausgebildet, dass jeweils zwei axial aufeinanderfolgende Sensormodule 18 durch axiales Zusammenfügen und insbesondere Zusammenstecken gemäß Pfeil 34 elektromechanisch miteinander koppelbar sind, wobei jeweils eine erste elektromechanische Verbindungseinrichtung 29a des einen Sensormoduls 18 mit einer zweiten elektromechanischen Verbindungseinrichtungen 29b des darauffolgenden Sensormoduls 18 gekoppelt wird. Bei einer solchen Kopplung stellen die ersten und zweiten elektrischen Schnittstellenmittel 32a, 32b eine elektrische Verbindung untereinander her und bewirken die ersten und zweiten Befestigungseinrichtungen 33a, 33b außerdem eine gegenseitige mechanische Fixierung der Sensormodule 18.

Vorzugsweise sind die mechanischen Befestigungseinrichtungen 33a, 33b als Steckverbindungseinrichtungen ausgebildet. Beim Ausführungsbeispiel ist dies der Fall. Auf diese Weise können aufeinanderfolgende Sensormodule 18 sehr einfach durch ausschließlich axiales Zusammenstecken gemäß Pfeil 34 miteinander gekoppelt werden.

Die mechanischen Befestigungseinrichtungen 33a, 33b sind insbesondere für eine lösbare Befestigung ausgelegt. Einmal zusammengefügte Sensormodule 18 können daher sehr leicht auch wieder voneinander getrennt werden, um beispielsweise eine Verkürzung des Modulstranges 16 herbeizuführen.

Vor allem wenn die Befestigungseinrichtungen 33a, 33b als Steckverbindungseinrichtungen ausgebildet sind, empfiehlt sich eine Ausstattung mit zueinander komplementären Rastmitteln 35a, 35b, mit deren Hilfe ein bevorzugt lösbar verrasteter Zusammenhalt zusammengefügter Sensormodule 18 realisierbar ist.

Die Befestigungseinrichtungen 33a, 33b können beispielsweise auch als Schraubbefestigungseinrichtungen ausgebildet sein oder als Bajonettverbindungseinrichtungen, so dass sich axial benachbarte Sensormodule 18 durch relatives Verdrehen um ihre Längsachse oder durch einen kombinierten Steck-Dreh-Vorgang miteinander koppeln und auch wieder voneinander entkoppeln lassen.

Das Kommunikationsmodul 23 ist ebenfalls mit einer elektromechanischen Verbindungseinrichtung 29c ausgestattet, in der elektrische Schnittstellenmittel 32c und eine mechanische Befestigungseinrichtung 33c zusammengefasst sind. Deren Gestaltung ist exemplarisch an diejenige der ersten elektromechanischen Verbindungseinrichtungen 29a und der zugehörigen ersten elektrischen Schnittstellenmittel 32a und ersten mechanischen Befestigungseinrichtung 33a der Sensormodule 18 angepasst, so dass eine vergleichbare Art der elektromechanischen Kopplung mit einem Sensormodul 18 möglich ist, wie sie unter benachbarten Sensormodulen 18 durchgeführt werden kann.

Die elektromechanische Verbindungseinrichtung 29c des Kommunikationsmoduls 23 kann alternativ auch zur Kopplung mit einer zweiten elektromechanischen Verbindungseinrichtung 29b der Sensormodule 18 ausgebildet sein. Ebenso ist es möglich, das Kommunikationsmodul 23 mit zwei elektromechanischen Verbindungseinrichtungen auszustatten, deren eine zur Kopplung mit einer ersten elektromechanischen Verbindungseinrichtung 29a und deren andere zur Kopplung zweiten elektromagnetischen Verbindungseinrichtung 29b geeignet ist. Enthält das Kommunikationsmodul 23 zwei elektromechanische Verbindungseinrichtungen besteht die Möglichkeit, das Kommunikationsmodul 23 anstatt als stirnseitigen Abschluss des Modulstranges 16 auch zwischen zwei Sensormodule 18 einzugliedern.

Die elektromechanische Verbindungseinrichtung 29c des Kommunikationsmoduls 23 kann wie bei den Sensormodulen 18 in entweder klassischer Form oder beispielsweise auch in Form von MID-Strukturen realisiert sein.

Jedes Sensormodul 18 enthält in seinem Innern elektrische Leitermittel 37, die mit seinen ersten und zweiten elektrischen Schnittstellenmitteln 32a, 32b verbunden sind und die zumindest teilweise auch direkt oder indirekt mit der mindestens einen Erfassungseinheit 19 des betreffenden Sensormoduls 18 gekoppelt sind. Im Innern des Kommunikationsmoduls 23 befinden sich elektrische Leitermittel 38, über die die elektrischen Schnittstellenmittel 32c des Kommunikationsmoduls 23 direkt oder indirekt mit der Kommunikationsschnittstelle 25 elektrisch gekoppelt sind.

Wenn daher eine Mehrzahl von Sensormodulen 18 und ein bevorzugt stirnseitig an der Reihe von Sensormodulen 18 platziertes Kommunikationsmodul 23 elektromechanisch miteinander gekoppelt sind, liegt ein durchgängige elektrische Verkettung sämtlicher Module 18, 23 vor, mit Hilfe derer in den einzelnen Sensormodulen 18 aufgrund der Aktivität der dortigen mindestens einen Erfassungseinheit 19 generierte Messsignale "M" an das Kommunikationsmodul 23 übermittelt werden können. Zugleich repräsentiert der durch die Aneinanderreihung der Module 18, 23 gebildete Modulstrang eine stabile und insbesondere selbsttragende Modulbaugruppe aufgrund der gegenseitigen Befestigung der in der Längsrichtung des Modulstranges 16 jeweils unmittelbar aufeinanderfolgenden Module 23, 18.

Bei einer nicht dargestellten Ausführungsform enthalten die diversen Module 18, 23 keine mechanischen Befestigungseinrichtungen zur gegenseitigen Fixierung und sind lediglich mit zur elektrischen Verkettung dienenden elektrischen Schnittstellenmitteln ausgestattet. Hier bedarf es dann zusätzlicher Maßnahmen, um die aneinandergereihten Module 18, 23 relativ zueinander zu fixieren, damit sie ihre Relativlage und auch die elektrische Verkettung beibehalten. Solche Maßnahmen können insbesondere darin bestehen, dass in einem Gehäuse 4 oder Tragkörper eine kanalartige oder bohrungsartige Ausnehmung bereitgestellt wird, in die die Module 18, 23 patronenartig aufeinanderfolgend eingeschoben werden, wobei sie sich stirnseitig aneinander abstützen. Als elektrische Schnittstellenmittel sind in diesem Fall insbesondere rein axial aneinander anliegende Berührkontaktmittel vorgesehen, die zum Ausgleich von Toleranzen auch als Federkontaktmittel realisiert sein können.

In dem Kommunikationsmodul 23 befindet sich zweckmäßigerweise eine elektrisch zwischen der Kommunikationsschnittstelle 25 und den angereihten Sensormodulen 18 bzw. den Erfassungseinheiten 19 platziert elektronische Auswerteeinrichtung 39. Sie ist zweckmäßigerweise mit mindestens einem Mikroprozessor ausgestattet und in der Lage, auf der Basis der von den einzelnen Sensormodulen 18 erhaltenen Messsignale "M" ein einheitliches Positionssignal "P" zu generieren und an der Kommunikationsschnittstelle 25 zur weiteren Verarbeitung in der externen elektronischen Steuereinrichtung 24 auszugeben. Dieses Positionssignal "P" entspricht unmittelbar der Position der Bewegungskomponente 5a und setzt sich zusammen aus den individuellen Daten bzw. Messsignalen "M" der in beliebiger Anzahl vorhandenen Sensormodule 18.

Beim Ausführungsbeispiel der Figur 2 handelt es sich bei den von den Sensormodulen 18 über die verketteten elektrischen Leitermittel 37 an das Kommunikationsmodul 23 übermittelten Messsignalen um unmittelbar die von den Erfassungseinheiten 19 generierten und keiner vorherigen weiteren Aufbereitung ausgesetzten Rohmesswerte. Die elektronische Intelligenz des Systems beschränkt sich somit auf die Ausstattung des Kommunikationsmoduls 23, während die Sensormodule 18 sehr kostengünstig ausgebildet werden können, wobei sich ihre elektrische Ausstattung im Wesentlichen auf die insbesondere von einem Magnetfeldsensor gebildete mindestens eine Erfassungseinheit 19 und die elektrischen Leitermittel 37 beschränkt.

Abweichend hiervon verfolgt die Ausführungsform der Figur 3 das Prinzip einer dezentralen Datenverarbeitung, indem dort jedes Sensormodul 18 über eine interne, eigene elektronische Auswerteeinheit 42 verfügt, in der unter Verarbeitung der von der mindestens einen Erfassungseinheit 19 des zugeordneten Sensormoduls 18 erhaltenen Rohmesswerte die letztlich an die elektronische Auswerteeinrichtung 39 der Kommunikationsmoduls 23 übermittelten Messsignale generiert werden. Die notwendige Rechenleistung der elektronischen Auswerteeinrichtung 39 des Kommunikationsmoduls 23 wird auf diese Weise reduziert, weil dort im Wesentlichen nur noch die Verknüpfung und die Skalierung der einzelnen Sensormodul-werte zu einem Gesamt-Positionssignal zu erfolgen hat.

An dieser Stelle sei bemerkt, dass auf ein gesondertes Kommunikationsmodul 23, wie es bei beiden Ausführungsbeispielen vorhanden ist, verzichtet werden kann, wenn stattdessen mindestens eines und vorzugsweise genau eines der Sensormodule 18 mit der Kommunikationsschnittstelle 25 und zweckmäßigerweise auch der elektronischen Auswerteeinrichtung 39 ausgestattet ist. Dies ist in Figur 3 strichpunktiert bei dem Sensormodul 18a angedeutet. In diesem Fall fungiert das die elektronische Auswerteeinrichtung 39 beinhaltende Sensormodul 18, 18a als Master-Sensormodul, während die übrigen Sensormodule 18 als Slave-Sensormodule fungieren, die mit dem Master kommunizieren.

Beide Ausführungsbeispiele bieten die vorteilhafte Möglichkeit, die elektronische Auswerteeinrichtung 39 gemäß dem IO-Link-System zu konzipieren.

Die interne elektrische Verkettung zwischen den einzelnen Modulen 18, 23 kann beispielsweise zur Verwirklichung einer analogen Signalübertragung konzipiert sein und beispielsweise aus einer parallelen Verdrahtung bestehen. Dies ist insbesondere bei dem in Figur 2 gezeigten Ausführungsbeispiel der Fall. Da hierbei allerdings aufgrund der notwendigen Anzahl paralleler elektrischer Leiter der Anzahl der verkettbaren Sensormodule 18 abmessungstechnisch begründete Grenzen gesetzt sind, wird eine digitale Datenübertragung mit Hilfe eines internen seriellen elektrischen Busses 43 vorgezogen. Ein solches System ist beim Ausführungsbeispiel der Figur 3 implementiert, bei dem die nach Aneinanderreihung der Module 18, 23 vorliegende elektrische Verkettung in Form des vorgenannten internen seriellen elektrischen Busses 43 realisiert ist.

Mit einem solchen seriellen Bussystem 43 ist insbesondere auch eine einfache Identifikation der einzelnen Sensormodule hinsichtlich der innerhalb des Modulstranges 16 eingenommenen Position möglich, so dass die elektronische Auswerteeinrichtung 39 zusammen mit den Messsignalen stets auch die Information erhält, von welchem Sensormodul 18 die erhaltenen Messsignale stammen, also beispielsweise vom ersten oder vom zweiten oder vom dritten usw. Sensormodul 18.

Damit kann die elektronische Auswerteeinrichtung 39 die erhaltenen individuellen Messsignale der einzelnen Steuermodule 18 unter Berücksichtigung deren innerhalb des Modulstranges 16 eingenommener Position auswerten.

Die Identifikation der einzelnen Sensormodule 18 und deren Erfassungseinheiten 19 innerhalb des Modulstranges 16 erfolgt zweckmäßigerweise durch Kommunikation und Datenaustausch zwischen der elektronischen Auswerteeinrichtung 39 des Kommunikationsmoduls 23 und den an Bord der einzelnen Sensormodule 18 befindlichen lokalen elektronischen Auswerteeinheiten 42. Diese Komponenten bilden somit, zusammen mit dem internen seriellen Bus 43, elektronische Identifizermittel 44, die zweckmäßigerweise in der Lage sind, eine selbsttätige, automatische Identifikation der Sensormodul-Position bzw. - reihenfolge nach dem Zusammensetzen des Modulstranges 16 festzustellen.

Im Rahmen der Identifikation werden die einzelnen Sensormodule 18 adressiert und die zugehörigen Adressinformationen in einem zu der jeweiligen elektronischen Auswerteeinheit 42 gehörenden, frei adressierbaren Adressspeicher 45 des betreffenden Sensormoduls 18 abgelegt. Diese logische Verkettung ist mit Hilfe eines intern adressierbaren seriellen Busses 43 wie beispielsweise I²C oder SPI sehr einfach möglich.

Eine anhand des Ausführungsbeispiels der Figur 3 ersichtliche vorteilhafte Ausstattungsvariante der Positionssensoreinrichtung 3 umfasst auch noch ein "Teachen" ermöglichende Eingabemittel 46, die mit der elektronischen Auswerteeinrichtung 39 gekoppelt sind und die es ermöglichen, derart auf das Sensorsystem einzuwirken, dass nur bestimmte Sensormodule und/oder nur bestimmte Erfassungseinheiten 19 bei der Ermittlung des an der Kommunikationsschnittstelle 25 abgreifbaren Positionssignals berücksichtigt werden. Zusätzlich oder alternativ ermöglichen es die Eingabemittel 46, die Sensormodule 18 hinsichtlich ihrer individuellen Schaltpunkte insbesondere frei zu programmieren. Die Eingabemittel 46 können beispielsweise mindestens einen Taster oder eine Tastatur enthalten oder ein geeignetes Programmierinterface mit dem sich vorrübergehend ein Programmiergerät anschließen lässt. Es ist auch möglich, dass die Eingabemittel 46 zusätzlich oder alternativ in der externen elektronischen Steuereinrichtung 24 integriert sind.

Anhand der Figuren 4 und 5 lässt sich das Funktionsprinzip der Positionssensoreinrichtung 3 in übersichtlicher Form leicht nachvollziehen.

Die Figur 4 repräsentiert ein Diagramm, das aus einer der Anzahl von Sensormodulen 18 - beim Ausführungsbeispiel vier Stück - entsprechenden Anzahl von Teildiagrammen besteht, in denen jeweils das von einem Sensormodul 18 ausgegebene Messsignale "M" in Abhängigkeit vom Weg "s" illustriert ist, wobei der Weg "s" die Relativposition der Bewegungskomponente 5a relativ zum zugeordneten Sensormodul 18 wiedergibt. Man erkennt anhand den einzelnen, gestrichelt abgebildeten Kennlinien 47, wie die individuellen Messsignale "M" innerhalb der einzelnen Sensormodule 18 beim Vorbeifahren der Bewegungskomponente 5a generiert werden, wobei die Höhe des jeweiligen Messsignals "M" mit zunehmender Entfernung der Bewegungskomponente 5a abnimmt. Aus der Figur 4 geht somit hervor, dass jedes der Sensormodule 18 ein analoges Ausgangssignal erzeugt, dessen Signalpegel proportional zu einer Position der Bewegungskomponente 5a gegenüber dem jeweiligen Sensormodul 18 ist.

Aufbauend auf dem Diagramm der Figur 4 zeigt das Diagramm der Figur 5 das an der Kommunikationsschnittstelle 25 in Abhängigkeit von der momentanen Position der Bewegungskomponente 5a ausgegebene Positionssignal "P" in Form einer einzigen Kennlinie 48. Aus den ursprünglich vier Messsignalen "M" der beim Ausführungsbeispiel vorhandenen vier Sensormodulen 18 ist letztlich nur noch ein einziges Positionssignal "P" geworden, das die gesamte Verfahrstrecke der Bewegungskomponente 5a abdeckt und das an einem einzigen Eingang der übergeordneten externen elektronischen Steuereinrichtung 24 eingespeist werden kann.

Es ist zweckmäßig, wenn die Positionssensoreinrichtung 3 über Befestigungsmittel 49 verfügt, mit deren Hilfe der Modulstrang 16 in der Aufnahmenut 22 des Gehäuses 4 oder sonstigen Tragkörpers ortsfest und insbesondere lösbar fixierbar ist. Die Figur 1 illustriert hierzu zwei mögliche Ausführungsformen.

Im einen Fall ist jedes Modul 18, 23 des Modulstranges 16 mit eigenen Befestigungsmitteln 49 ausgestattet, die seine gehäuseseitige Fixierung unabhängig von den anderen Modulen 18, 23 ermöglichen. Wenn die Aufnahmenut 22 einen hinterschnittenen Querschnitt hat und beispielsweise als T-Nut oder als Schwalbenschwanznut ausgeführt ist, können die Befestigungsmittel 49 ein drehbares Element enthalten, das bewirkt, dass beim Verdrehen entweder das Modulgehäuse 27, 28 oder ein separates Spannelement mit der Innenfläche der Aufnahmenut 22 verspannt wird.

Bei einer weiteren Ausführungsform verfügen lediglich das erste und das letzte Modul 23, 18 des Modulstranges 1.6 mit entsprechenden Befestigungsmitteln 49, wobei die dazwischen angeordneten Sensormodule 18 durch ihre gegenseitige Verbindung und die Verbindung zu den äußeren Modulen 18, 23 automatisch ebenfalls festgehalten werden. Beim Ausführungsbeispiel würde dementsprechend das Kommunikationsmodul 23 und das den Modulstrang 16 auf der entgegengesetzten Stirnseite abschließende Sensormodul 18 mit solchen Befestigungsmitteln 49 ausgestattet sein.

Eine weitere Befestigungsmöglichkeit besteht darin, zusätzlich zu den Modulen 18, 23 des Modulstranges 16 separate Befestigungsmodule vorzusehen, die beispielsweise an beiden Stirnseiten an den Modulstrang 16 ankoppelbar sind und mit deren Hilfe dann der Modulstrang 16 in der Aufnahmenut 22 fixierbar ist. In Figur 1 ist ein solches zusätzliches Befestigungsmodul bei 52 gepunktet angedeutet.

Das mindestens eine Befestigungsmodul 52 kann gleichzeitig als Abdeckung für die offenen elektromechanischen Verbindungseinrichtungen 29a, 29b des benachbarten Sensormoduls 18 ausgebildet sein.

Abgesehen von der beispielhaft erläuterten Anwendung in Verbindung mit der Positionserfassung der Abtriebseinheit 5 eines fluidbetätigten Linearantriebes 2 lässt sich die Positionssensoreinrichtung 3 selbstverständlich auch in allen anderen Fällen einsetzen, in denen es darum geht, die Position einer sich linear bewegenden Bewegungskomponente 5a zu bestimmen. Zu denken ist hierbei beispielsweise an die Positionserfassung bei einem elektrischen Linearantrieb oder an die Positionserfassung der Stößeleinheit eines keinen eigenen Antrieb aufweisenden Stoßdämpfers.

## Patentansprüche

1. Positionssensoreinrichtung, mit mehreren Sensoreinheiten, die jeweils mindestens eine zum Detektieren einer sich in der Nähe befindlichen Bewegungskomponente (5a) geeignete Erfassungseinheit (19) beinhalten, und mit einer Kommunikationsschnittstelle (25) zur Ausgabe eines auf individuellen Messsignalen der mehreren Sensoreinheiten basierenden einheitlichen Positionssignals, wobei die Sensoreinheiten als mit elektrischen Schnittstellenmitteln (32a, 32b) ausgestattete individuelle Sensormodule (18) ausgebildet sind, die unter gegenseitiger elektrischer Verkettung und Bildung eines Modulstranges (16) in variabler Anzahl aneinanderreihbar sind, **dadurch gekennzeichnet, dass** die Sensormodule (18) jeweils für die Ausgabe eines analogen Messsignals ausgebildet sind, das eine relative Lage der Bewegungskomponente (5a) gegenüber dem jeweiligen Sensormodul (18) repräsentiert, so dass das einheitliche Positionssignal als Absolutpositionssignal für die Position der Bewegungskomponente (5a) längs des Modulstranges (16) ermittelbar ist.

2. Positionssensoreinrichtung nach Anspruch 1, **dadurch gekennzeichnet, dass** die mehreren Sensormodule (18) jeweils über einander entgegengesetzt orientierte erste und zweite elektrische Schnittstellenmittel (32a, 32b) verfügen, die derart aneinander angepasst sind, dass die Sensormodule (18) jeweils paarweise zur Herstellung einer elektrischen Verbindung mit ihren ersten und zweiten elektrischen Schnittstellenmitteln (32a, 32b) koppelbar sind und/oder dass die Sensormodule (18) mit mechanischen Befestigungseinrichtungen (33a, 33b) ausgestattet sind, durch die innerhalb des Modulstranges (16) in Stranglängsrichtung benachbart zueinander angeordnete Sensormodule in bevorzugt lösbarer Weise aneinander befestigt sind, so dass der Modulstrang (16) von einer zusammenhängenden Modulbaugruppe gebildet ist, wobei die Befestigungseinrichtungen (33a, 33b) zweckmäßigerweise als Steckverbindungseinrichtungen ausgebildet sind.

3. Positionssensoreinrichtung nach Anspruch 2, **dadurch gekennzeichnet, dass** die elektrischen Schnittstellenmittel (32a, 32b) mit den mechanischen Befestigungseinrichtungen (33a, 33b) zu elektromechanischen Verbindungseinrichtungen (29a, 29b) zusammengefasst sind.

4. Positionssensoreinrichtung nach einem der Ansprüche 1 bis 3, **dadurch gekennzeichnet, dass** sie über ein bezüglich den Sensormodulen (18) gesondertes und mit der Kommunikationsschnittstelle (25) ausgestattetes Kommunikationsmodul (23) verfügt, das zur elektrischen Integration in den Modulstrang (16) mit mindestens einem der Sensormodule (18) koppelbar ist.

5. Positionssensoreinrichtung nach Anspruch 4, **dadurch gekennzeichnet, dass** das Kommunikationsmodul (23) über elektrische Schnittstellenmittel (32c) verfügt, mit denen es beim Anbringen an einem der Sensormodule (18) eine elektrische Verbindung mit diesem Sensormodul (18) eingeht, wobei das Kommunikationsmodul (23) zweckmäßigerweise ausgebildet ist, um stirnseitig an ein die Reihe von Sensormodulen (18) abschließendes Sensormodul (18a) ansetzbar zu sein und/oder dass das Kommunikationsmodul (23) eine Befestigungseinrichtung (33c) zur insbesondere lösbaren Befestigung an einem Sensormodul (18) aufweist.

6. Positionssensoreinrichtung nach einem der Ansprüche -1 bis 5, **dadurch gekennzeichnet, dass** sie eine der Kommunikationsschnittstelle (25) innerhalb des Modulstranges (16) vorgeschaltete elektronische Auswerteeinrichtung (39) enthält, die ausgebildet ist, um auf der Basis von den Sensormodulen (18) erhaltener Messsignale das auszugebende Positionssignal zu generieren.

7. Positionssensoreinrichtung nach Anspruch 6, **dadurch gekennzeichnet, dass** die elektronische Auswerteeinrichtung (39) ein Bestandteil des Kommunikationsmoduls (23) und/oder eines Sensormoduls (18) ist.

8. Positionssensoreinrichtung nach Anspruch 6 oder 7, **dadurch gekennzeichnet, dass** die der elektronischen Auswerteeinrichtung (39) von den Sensormodulen (18) zugeleiteten Messsignale unmittelbar von den Erfassungseinheiten (19) generierte, unaufbereitete Rohmesswerte sind oder dass jedes Sensormodul (18) über eine eigene elektronische Auswerteeinheit (42) verfügt, in der unter Verarbeitung der von der mindestens einen Erfassungseinheit (19) des betreffenden Sensormoduls (18) gelieferten Rohmesswerte Messsignale generiert werden, die innerhalb des Modulstranges (16) an die elektronische Auswerteeinrichtung (39) weitergeleitet werden.

9. Positionssensoreinrichtung nach einem der Ansprüche 6 bis 8, **dadurch gekennzeichnet, dass** die elektronische Auswerteeinrichtung (39) ausgebildet ist, um individuelle Messsignale der einzelnen Sensormodule (18) zu empfangen und unter Berücksichtigung der innerhalb des Modulsstranges (16) eingenommenen Position der einzelnen Sensormodule (18) zu dem an der Kommunikationsschnittstelle (25) ausgebbaren Positionssignal zu verarbeiten.

10. Positionssensoreinrichtung nach einem der Ansprüche 1 bis 9, **dadurch gekennzeichnet, dass** sie über elektronische Identifiziermittel (44) zur insbesondere selbsttätige Identifizierung der von den Sensormodulen (18) innerhalb des Modulstranges (16) jeweils eingenommenen Position verfügt, die zweckmäßigerweise über in den Sensormodulen (18) enthaltene, frei adressierbare Adressspeicher (45) sowie einen den Modulstrang (16) durchziehenden und mit den Adressspeichern (45) kommunizierenden internen seriellen elektrischen Bus (43) verfügen.

11. Positionssensoreinrichtung nach einem der Ansprüche 1 bis 10, **dadurch gekennzeichnet, dass** sie Eingabemittel (46) zur Programmierung der bei der Generierung des an der Kommunikationsschnittstelle (25) auszugebenden Positionssignals zu berücksichtigenden Erfassungseinheiten (19) und/oder zur Programmierung der individuellen Schaltpunkte der einzelnen Erfassungseinheiten (19) verfügt.

12. Positionssensoreinrichtung nach einem der Ansprüche 1 bis 11, **dadurch gekennzeichnet, dass** sie parametrisierbar ausgebildet ist, insbesondere mittels einer an die Kommunikationsschnittstelle (25) angeschlossenen oder anschließbaren externen elektronischen Steuereinrichtung (24) und zweckmäßigerweise indem mindestens ein Modul (18, 25) des Modulstranges (16) und insbesondere zumindest jedes Sensormodul (18) parametrisierbar ist.

13. Positionssensoreinrichtung nach einem der Ansprüche 1 bis 12, **dadurch gekennzeichnet, dass** sie über Befestigungsmittel (49) zur Fixierung des Modulsstranges (16) in einer Aufnahmenut (22) eines beispielsweise vom Gehäuse (4) eines Linearantriebes (2) gebildeten Tragkörpers verfügt, die sich zweckmäßigerweise an mindestens einer Komponente des Modulstränges (16) befinden.

14. Positionssensoreinrichtung nach einem der Ansprüche 1 bis 13, **dadurch gekennzeichnet, dass** die Sensormodule (18) jeweils für die Ausgabe des analogen Messsignals a mit einer Ortsauflösung, die kleiner als eine geometrische Erstreckung des jeweiligen Sensormoduls (18) längs einer Bewegungsachse der Bewegungskomponente (5a) ist, ausgebildet sind.

15. Linearantriebsvorrichtung, mit einem Linearantrieb (2), der ein Gehäuse (4) und eine diesbezüglich bewegbare, die Bewegungskomponente (5a) bildende Abtriebseinheit (5) enthält und der mit mindestens einer Positionssensoreinrichtung (3) gemäß einem der Ansprüche 1 bis 14 ausgestattet ist.

## Claims

1. Position sensor device comprising a plurality of sensor units, each of which contains at least one detection unit (19) suitable for detecting a motion component (5a) in the vicinity, and further comprising a communication interface (25) for outputting a uniform position signal based on individual measurement signals of the plurality of sensor units, wherein the sensor units are designed as individual sensor modules (18) which are equipped with electric interface means (32a, 32b) and which can be lined up in variable numbers while being mutually interconnected electrically and forming a string of modules (16), **characterised in that** each of the sensor modules (18) is designed for outputting an analogue measurement signal which represents a position of the motion component (5a) relative to the respective sensor module (18), so that the uniform position signal can be established as absolute position signal for the position of the motion component (5a) along the string of modules (16).

2. Position sensor device according to claim 1, **characterised in that** each of the plurality of sensor modules (18) is provided with oppositely oriented first and second interface means (32a, 32b), which are matched to one another in such a way that the sensor modules (18) can be coupled in pairs to establish an electric connection with their first and second interface means (32a, 32b), and/or **in that** the sensor modules (18) are equipped with mechanical fastening devices (33a, 33b), by means of which the sensor modules arranged adjacent to one another within the string of modules (16) in the longitudinal direction of the string can be secured to one another, preferably in a releasable manner, so that the string of modules (16) is represented by a cohesive module assembly, the fastening devices (33a, 33b) being expediently designed as plug-and-socket devices.

3. Position sensor device according to claim 2, **characterised in that** the electric interface means (32a, 32b) are combined with the mechanical fastening devices (33a, 33b) to form electromechanical connecting devices (29a, 29b).

4. Position sensor device according to any of claims 1 to 3, **characterised in that** it comprises a communication module (23), which is separate from the sensor modules (18) and equipped with the communication interface (25), and which can be coupled to at least one of the sensor modules (18) for electric integration into the string of modules (16).

5. Position sensor device according to claim 4, **characterised in that** the communication module (23) comprises electric interface means (32c), with which, when mounted on one of the sensor modules (18), it establishes an electric connection with this sensor module (18), the communication module (23) being expediently designed for fitting to the end face of a sensor module (18a) at the end of the row of sensor modules (18), and/or **in that** the communication module (23) comprises a fastening device (33c) for the in particular releasable mounting on a sensor module (18).

6. Position sensor device according to any of claims 1 to 5, **characterised in that** it comprises an electronic evaluation device (39), which is located upstream of the communication interface (25) within the string of modules (16) and which is designed to generate the position signal to be output on the basis of the measurement signals received from the sensor modules (18).

7. Position sensor device according to claim 6, **characterised in that** the electronic evaluation device (39) is a part of the communication module (23) and/or of a sensor module (18).

8. Position sensor device according to claim 6 or 7, **characterised in that** the measurement signals fed to the electronic evaluation device (39) by the sensor modules (18) are unconditioned raw measurement signals generated directly by the detection units (19), or **in that** each sensor module (18) comprises its own electronic evaluation unit (42), in which, by processing the raw measurement values provided by the at least one detection unit (19) of the respective sensor module (18), measurement signals are generated which are transferred to the electronic evaluation device (39) within the string of modules (16).

9. Position sensor device according to any of claims 6 to 8, **characterised in that** the electronic evaluation device (39) is designed to receive individual measurement signals of each of the sensor modules (18) and to process them into the position signal to be output at the communication interface (25), taking into account the position adopted by the individual sensor modules (18) within the string of modules (16).

10. Position sensor device according to any of claims 1 to 9, **characterised in that** it comprises electronic identifying means (44) for the in particular automatic identification of the position adopted by each sensor module (18) within the string of modules (16), which identifying means (44) expediently comprise address memories (45) contained within the sensor modules (18) and freely addressable and an internal serial electric bus (43) extending through the string of modules (16) and communicating with the address memories (45).

11. Position sensor device according to any of claims 1 to 10, **characterised in that** it comprises inputting means (46) for programming the detection units (19) to be taken into account when generating the position signal to be output at the communication interface (25) and/or for programming the individual switching points of each of the detection units (19).

12. Position sensor device according to any of claims 1 to 11, **characterised in that** it is designed to be parameterisable, in particular by means of an external electronic control unit (24) which is or can be connected to the communication interface (25), and expediently by providing that at least one module (18, 25) of the string of modules (16) and in particular at least every sensor module (18) is parameterisable.

13. Position sensor device according to any of claims 1 to 12, **characterised in that** it comprises fastening means (49) for locating the string of modules (16) in a reception groove (22) of a support body which is, for example, represented by the housing (4) of a linear drive (2), which fastening means (49) are expediently located on at least one component of the string of modules (16).

14. Position sensor device according to any of claims 1 to 12, **characterised in that** each of the sensor modules (18) is designed for outputting the analogue measurement signal a with a local resolution which is smaller than a geometrical dimension of the respective sensor module (18) along an axis of motion of the motion component (5a).

15. Linear drive device with a linear drive (2) comprising a housing (4) and a drive unit (5) movable relative thereto and forming the motion component (5a), which linear drive (2) is equipped with at least one position sensor device (3) according to any of claims 1 to 14.

## Revendications

1. Dispositif de capteur de position, avec de multiples unités de capteur qui contiennent chacune au moins une unité de détection (19) appropriée pour la détection d'une composante de mouvement (5a) se trouvant à proximité, et avec une interface de communication (25) pour la sortie d'un signal de position uniforme basé sur des signaux de mesure individuels des multiples unités de capteur, les unités de capteur étant formées en tant que modules de capteur (18) individuels qui sont équipés de moyens d'interface électriques (32a, 32b) et qui peuvent être alignés les uns à côté des autres selon un nombre variable par un chaînage électrique l'un à l'autre et une formation d'une ligne de modules (16), **caractérisé en ce que** les modules de capteur (18) sont formés chacun pour la sortie d'un signal de mesure analogique qui représente une position relative de la composante de mouvement (5a) par rapport au module de capteur (18) respectif de sorte que le signal de position uniforme puisse être déterminé en tant que signal de position absolue pour la position de la composante de mouvement (5a) le long de la ligne de modules (16).

2. Dispositif de capteur de position selon la revendication 1, **caractérisé en ce que** les multiples modules de capteur (18) disposent chacun de premier et second moyens d'interface électriques (32a, 32b) orientés en sens inverse l'un de l'autre qui sont adaptés l'un à l'autre de sorte que les modules de capteur (18) puissent être couplés chacun par paire pour l'établissement d'une liaison électrique avec leur premier et second moyens d'interface électriques (32a, 32b) et/ou **en ce que** les modules de capteur (18) soient équipés de dispositifs de fixation mécaniques (33a, 33b) par lesquels des modules de capteur disposés les uns à côté des autres à l'intérieur de la ligne de modules (16) dans la direction longitudinale de la ligne sont fixés entre de préférence eux d'une manière détachable de sorte que la ligne de modules (16) soit formée par un ensemble contigu de modules, les dispositifs de fixation (33a, 33b) étant formés de manière fonctionnelle en tant que dispositifs de connexion enfichables.

3. Dispositif de capteur de position selon la revendication 2, **caractérisé en ce que** les moyens d'interface électriques (32a, 32b) sont regroupés avec les dispositifs de fixation mécaniques (33a, 33b) en des dispositifs électromécaniques de connexion (29a, 29b).

4. Dispositif de capteur de position selon l'une quelconque des revendications 1 à 3, **caractérisé en ce qu'**il dispose d'un module de communication (23) qui est séparé des modules de capteur (18) et équipé de l'interface de communication (25) et qui peut être couplé, pour l'intégration électrique dans la ligne de modules (16), avec au moins un des modules de capteur (18).

5. Dispositif de capteur de position selon la revendication 4, **caractérisé en ce que** le module de communication (23) dispose de moyens d'interface électriques (32c) avec lesquels, en cas de montage sur un des modules de capteur (18), est réalisée une connexion électrique avec ce module de capteur (18), le module de communication (23) étant formé de manière fonctionnelle pour pouvoir être ajouté sur la face d'un module de capteur (18a) terminant la rangée de modules de capteur (18) et/ou **en ce que** le module de communication (23) comprend un dispositif de fixation (33c) pour la fixation en particulier de manière détachable à un module de capteur (18).

6. Dispositif de capteur de position selon l'une quelconque des revendications précédentes 1 à 5, **caractérisé en ce qu'**il contient un dispositif d'évaluation électronique (39), monté en amont de l'interface de communication (25) à l'intérieur de la ligne de modules (16), qui est formé pour générer, sur la base de signaux de mesure obtenus des modules de capteur (18), le signal de position à sortir.

7. Dispositif de capteur de position selon la revendication 6, **caractérisé en ce que** le dispositif d'évaluation électronique (39) est un élément constitutif du module de communication (23) et/ou d'un module de capteur (18).

8. Dispositif de capteur de position selon la revendication 6 ou 7, **caractérisé en ce que** les signaux de mesure amenés au dispositif d'évaluation électronique (39) par les modules de capteur (18) sont des valeurs de mesure brutes non préparées, générées directement par les unités de détection (19) ou **en ce que** chaque module de capteur (18) dispose de sa propre unité d'évaluation électronique (42) dans laquelle, par le traitement des valeurs de mesure brutes livrées par la ou les unités de détection (19) du module de capteur (18) concerné, sont générés des signaux de mesure qui sont transférés à l'intérieur de la ligne de modules (16) au dispositif d'évaluation électronique (39).

9. Dispositif de capteur de position selon l'une quelconque des revendications 6 à 8, **caractérisé en ce que** le dispositif d'évaluation électronique (39) est formé pour recevoir des signaux de mesure individuels des différents modules de capteur (18) et pour les traiter en tenant compte de la position prise à l'intérieur de la ligne de modules (16) par les différents modules de capteur (18) par rapport au signal de position pouvant être sorti sur l'interface de communication (25).

10. Dispositif de capteur de position selon l'une quelconque des revendications 1 à 9, **caractérisé en ce qu'**il dispose de moyens d'identification électroniques (44) qui servent à l'identification en particulier autonome de la position prise respectivement par les modules de capteur (18) à l'intérieur de la ligne de modules (16) et qui disposent de manière fonctionnelle de mémoires d'adresses (45) librement adressables et contenues dans les modules de capteur (18) ainsi que d'un bus électrique série interne (43) traversant la ligne de modules (16) et communiquant avec les mémoires d'adresses (45).

11. Dispositif de capteur de position selon l'une quelconque des revendications 1 à 10, **caractérisé en ce qu'**il dispose de moyens d'entrée (46) pour la programmation des unités de détection (19) devant être prises en compte lors de la génération du signal de position à sortir sur l'interface de communication (25) et/ou pour la programmation des points de commande individuels des différentes unités de détection (19).

12. Dispositif de capteur de position selon l'une quelconque des revendications 1 à 11, **caractérisé en ce qu'**il est formé pour être paramétrable, en particulier au moyen d'un dispositif de commande électronique externe (24) raccordé ou raccordable à l'interface de communication (25) et de manière fonctionnelle par le fait qu'au moins un module (18, 25) de la ligne de modules (16) et, en particulier, au moins chaque module de capteur (18) soient paramétrables.

13. Dispositif de capteur de position selon l'une quelconque des revendications 1 à 12, **caractérisé en ce qu'**il dispose de moyens de fixation (49) qui servent à la fixation de la ligne de modules (16) dans une gorge de logement (22) d'un corps porteur formé par exemple par le boîtier (4) d'un entraînement linéaire (2) et qui se trouvent de manière fonctionnelle sur au moins un composant de la ligne de modules (16).

14. Dispositif de capteur de position selon l'une quelconque des revendications 1 à 13, **caractérisé en ce que** les modules de capteur (18) sont formés chacun pour la sortie du signal de mesure analogique avec une résolution locale qui est plus petite qu'une étendue géométrique du module de capteur (18) en question le long d'un axe de déplacement de la composante de mouvement (5a).

15. Dispositif d'entraînement linéaire équipé d'un entraînement linéaire (2) qui contient un boîtier (4) et une unité d'entraînement (5) mobile par rapport à ce dernier et formant la composante de mouvement (5a) et qui est équipé au moins d'un dispositif de capteur de position (3) selon l'une quelconque des revendications 1 à 14.
